# EUROPEAN PATENT APPLICATION

(11) **EP 4 811 881 A1**
(43) Date of publication of application: **23.09.2026**
(21) Application number: 24919398.8
(22) Date of filing: 26.01.2024
(51) Int. Cl.: H04W 52/02

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIN, Hao, Dongguan, Guangdong 523860 (CN)
(74) Representative: RGTH
(86) International application number: PCT/CN2024/074339
(87) International publication number: WO 2025/156300

(57) **Abstract**

Provided are a wireless communication method, a terminal device, and a network device. The method comprises: a first terminal device receives first information from a first cell; the firs terminal device sends second information in a second cell on the basis of the first information, wherein the second information is used for requesting to receive system information of the second cell.

## Description

### TECHNICAL FIELD

The present application relates to the field of communication technologies, and more particularly, to a wireless communication method, a terminal device, and a network device.

### BACKGROUND

A network energy saving (NES) cell can transmit system information based on a request of a terminal device, thereby reducing energy consumption. How the terminal device accesses the NES cell is a problem that needs to be solved.

### SUMMARY

The present application provides a wireless communication method, a terminal device, and a network device. The various aspects of the present application are described below.

In a first aspect, a wireless communication method is provided, which includes: receiving, by a first terminal device, first information from a first cell; and transmitting, by the first terminal device, second information in a second cell according to the first information, where the second information is used to request to receive system information of the second cell.

In a second aspect, a wireless communication method is provided, which includes: transmitting, by a network device, first information via a first cell, where the first information is used for a terminal device to transmit second information in a second cell, and the second information is used for the terminal device to request to receive system information of the second cell.

In a third aspect, a terminal device is provided, where the terminal device is a first terminal device, and the terminal device includes: a first communication module, configured to receive first information from a first cell; and a second communication module, configured to transmit second information in a second cell according to the first information, where the second information is used to request to receive system information of the second cell.

In a fourth aspect, a network device is provided, which includes: a first communication module, configured to transmit first information via a first cell, where the first information is used for a terminal device to transmit second information in a second cell, and the second information is used for the terminal device to request to receive system information of the second cell.

In a fifth aspect, a terminal device is provided, which includes a transceiver, a memory, and a processor, where the memory is configured to store a program, and the processor is configured to invoke the program in the memory and control the transceiver to receive or transmit a signal, to enable the terminal device to perform the method as described in the first aspect.

In a sixth aspect, a network device is provided, which includes a transceiver, a memory, and a processor, where the memory is configured to store a program, and the processor is configured to invoke the program in the memory and control the transceiver to receive or transmit a signal, to enable the network device to perform the method as described in the second aspect.

In a seventh aspect, an apparatus is provided, which includes a processor, configured to invoke a program from a memory, to enable the apparatus to perform the method as described in the first aspect or the second aspect.

In an eighth aspect, a chip is provided, which includes a processor, configured to invoke a program from a memory, to enable a device equipped with the chip to perform the method as described in the first aspect or the second aspect.

In a ninth aspect, a computer-readable storage medium is provided, which has stored thereon a program, where the program enables a computer to perform the method as described in the first aspect or the second aspect.

In a tenth aspect, a computer program product is provided, which includes a program, where the program enables a computer to perform the method as described in the first aspect or the second aspect.

In an eleventh aspect, a computer program is provided, where the computer program enables a computer to perform the method as described in the first aspect or the second aspect.

In the embodiments of the present application, a terminal device obtains first information from a first cell, and requests to receive system information of a second cell (an NES cell) based on the first information. The introduction of the first information helps the terminal device access the NES cell.

### BRIEF DESCRIPTION OF THE DRAWINGS

FIG. 1 is a schematic diagram of a system architecture of a wireless communication system to which embodiments of the present application can be applied.
FIG. 2 is a schematic diagram of an application scenario of the embodiments of the present application.
FIG. 3 is a schematic flowchart of a wireless communication method provided in an embodiment of the present application.
FIG. 4 is a more specific schematic diagram of the method illustrated in FIG. 3.
FIG. 5 is another more specific schematic diagram of the method illustrated in FIG. 3.
FIG. 6 is a schematic flowchart of a wireless communication method provided in another embodiment of the present application.
FIG. 7 is a schematic diagram of a cell access process provided in an embodiment of the present application.
FIG. 8 is a schematic diagram of a cell access process provided in another embodiment of the present application.
FIG. 9 is a schematic diagram of an association relationship between a first resource (used to carry second information, where the second information is used to request to receive system information of a cell) and a synchronization signal block (SSB) provided in an embodiment of the present application.
FIG. 10 is a schematic diagram of an implementation of seventh information (used to indicate whether monitoring a type0-physical downlink control channel (Type0-PDCCH) is needed) provided in an embodiment of the present application.
FIG. 11 is a schematic diagram of a determination manner of a starting resource position of a first resource provided in an embodiment of the present application.
FIG. 12 is a schematic structural diagram of a terminal device provided in an embodiment of the present application.
FIG. 13 is a schematic structural diagram of a network device provided in an embodiment of the present application.
FIG. 14 is a schematic diagram of an apparatus to which embodiments of the present application can be applied.

### DETAILED DESCRIPTION

Technical solutions in the present application will be described below with reference to the accompanying drawings.

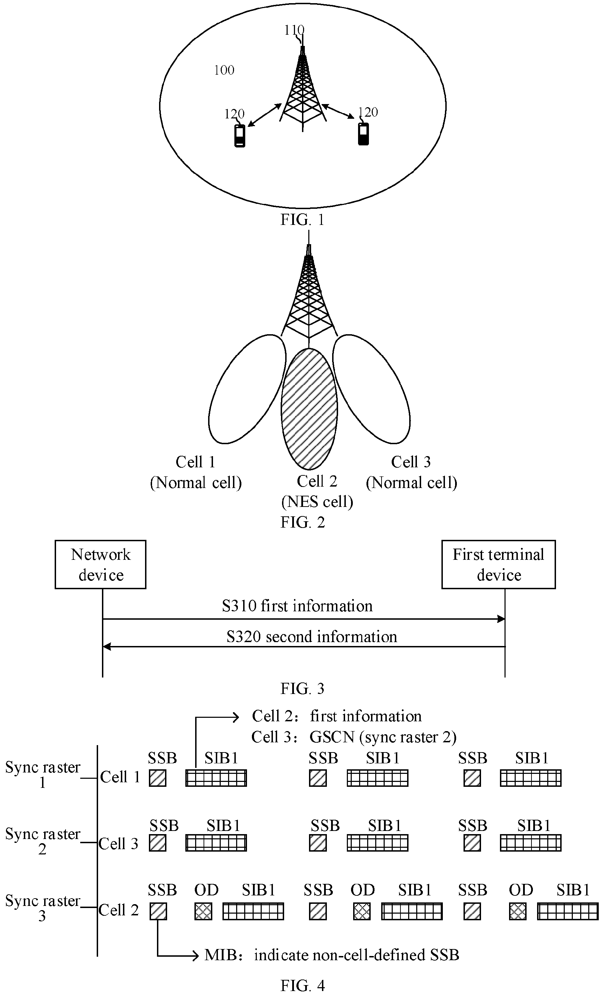

FIG. 1 is a schematic diagram of a system architecture of a wireless communication system 100 to which embodiments of the present application can be applied. The wireless communication system 100 may include a network device 110 and terminal devices 120. The network device 110 may be a device that communicates with the terminal device 120. The network device 110 may provide network coverage for a specific geographical area and may communicate with the terminal device 120 located within the coverage area. The terminal device 120 may access a network (e.g., a wireless network) through the network device 110. Optionally, the wireless communication system 100 may further include other network entities such as a network controller and a mobility management entity, which is not limited in the embodiments of the present application.

It should be understood that the technical solutions of the embodiments of the present application may be applied to various communication systems, such as a 5th generation (5G) system or new radio (NR), a long term evolution (LTE) system, an LTE frequency division duplex (FDD) system, an LTE time division duplex (TDD) system, etc. The technical solutions provided in the present application may also be applied to future communication systems, such as a 6th generation mobile communication system, a satellite communication system, etc.

In the embodiments of the present application, the terminal device may also be referred to as a user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent, or a user apparatus. In the embodiments of the present application, the terminal device may refer to a device that provides voice and/or data connectivity to a user, and may be used to connect people, objects and machines, such as a handheld device or in-vehicle device with a wireless connection function. In the embodiments of the present application, the terminal device may be a mobile phone, a tablet computer (Pad), a laptop computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the terminal device may act as a base station. For example, the terminal device may act as a scheduling entity that provides sidelink signals between terminal devices in scenarios such as vehicle to everything (V2X) or device to device (D2D) communications. For example, a cellular phone and a car may communicate with each other by using sidelink signals. A cellular phone and a smart home device may communicate with each other without relaying communication signals via a base station.

In the embodiments of the present application, the network device may be a device used for communicating with a terminal device. The network device may be, for example, an access network device or a radio access network device. For example, the network device may be a base station. The base station may broadly cover the following various names, or may be replaced with the following names, such as: a NodeB, an evolved base station (evolved NodeB, eNB), a next generation base station (next generation NodeB, gNB), a relay station, an access point, a transmitting and receiving point (TRP), a transmitting point (TP), a home base station, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or similar entities, or a combination thereof.

In a legacy communication system (e.g., a legacy NR system), a network device periodically transmits system information (e.g., system information block 1 (SIB1) ). The system information is very important for a terminal device in an idle state, as the terminal device in the idle state may access the network device based on the system information.

However, some of the periodically transmitted system information is wasted (e.g., at a certain moment, the network device transmits system information, but no terminal device needs to obtain the system information at this time). In addition, because the network device needs to maintain the system information all the time, the network device cannot enter a deep sleep mode to save power consumption. According to statistical data of the operator, electricity consumption is one of the main sources of operating costs of the operator. Therefore, if the energy consumption of the network device may be reduced, it will not only help to better operate a future cellular system, but also be beneficial to the ecosystem (it may reduce carbon release, thereby slowing down the pace of global warming). However, if the network device directly deletes the system information, the terminal device in the idle state will be unable to access the cell. Therefore, an ideal approach is to optimize transmission of the system information, that is, the terminal device may request the system information of the cell on demand, and the network device transmits the system information to the terminal device only when transmission of the system information is required.

The embodiments of the present application propose a wireless communication method, which helps a terminal device request system information of a cell on demand.

FIG. 2 is a schematic diagram of an application scenario of the embodiments of the present application. As illustrated in FIG. 2, cells within the coverage area of a network device include Cell 1, Cell 2, and Cell 3. Cell 1 and Cell 3 are normal cells, while Cell 2 is an NES cell. The difference between the normal cell and the NES cell is that the NES cell does not periodically broadcast system information (e.g., SIB1). When a terminal device expects to access the NES cell, the terminal device may request system information of the NES cell from the network device. After receiving the request, the NES cell may start transmitting the system information. It can be seen that the NES cell transmits the system information on demand, thereby significantly saving power/energy. It should be understood that FIG. 2 is described by taking Cell 1 to Cell 3 belonging to the same network device as an example, which is not limited in the embodiments of the present application. For example, Cell 1, Cell 2, and Cell 3 may belong to different network devices. Alternatively, two of Cell 1 to Cell 3 belong to the same network device, and the other cell belongs to another network device.

FIG. 3 is a schematic flowchart of a wireless communication method provided in an embodiment of the present application. The method illustrated in FIG. 3 is described from the perspective of interaction between a first terminal device and a network device. The first terminal device may be a terminal device that supports NES technology (supporting the network device to transmit system information on demand). The first terminal device may be referred to as a new terminal device, a release 19 (R19) or later terminal device. In addition, in the embodiments of the present application, a terminal device that does not support accessing or camping on an NES cell (or a terminal device that does not support the network device to transmit system information on demand) is referred to as a second terminal device. The second terminal device may also be understood as an earlier release terminal device or a legacy terminal device.

Referring to FIG. 3, in step S310, the first terminal device receives first information from a first cell. The first cell may be, for example, a normal cell, that is, a cell that periodically broadcasts system information.

The first information may be information related to a second cell. The second cell mentioned here may be referred to as an NES cell, or a cell that transmits system information on demand. For example, the first information may be used for a terminal device to obtain system information of the second cell. The system information mentioned in the embodiments of the present application may include an SIB1. As an example, the system information mentioned in the embodiments of the present application refers to SIB1.

In step S320, the first terminal device transmits second information in the second cell according to the first information. The second information may be transmitted by the first terminal device in an idle state or an inactive state. The second information is used to request to receive the system information of the second cell. In other words, the second information is used to request or trigger the second cell to transmit system information. The second information may be referred to as a request signal or an on demand (OD) signal. As an example, the second information may be an uplink wake up signal (WUS).

In the embodiments of the present application, first information is introduced in the first cell. The first information may help a terminal device receive the system information of the second cell (an NES cell), thereby helping the terminal device access the NES cell.

The content, purpose, or carrying position of the first information is described in detail below with examples.

In some implementations, the first information may be carried in the system information transmitted by the first cell. For example, the first information may be carried in one or more of an SIB1, an SIB2, an SIB3, or an SIB4 transmitted by the first cell. If the first information is carried in one or more of an SIB2, an SIB3, or an SIB4, the first terminal device may first obtain an SIB1 in the first cell, and then obtain other system information such as the SIB2, the SIB3, or the SIB4 through the SIB1, thereby obtaining the first information.

In some implementations, the first information may be used for cell reselection. That is to say, the first information may be cell reselection information of the first cell. In the embodiments of the present application, the first information is added to the cell reselection information, which helps the first terminal device reselect to a second cell (e.g., an NES cell) through a cell reselection process. It can be seen that this implementation provides an enhanced cell reselection scheme.

In some implementations, the first information (e.g., cell reselection information) may include one or more of:
third information, used to indicate a frequency corresponding to the second cell;
fourth information, used to transmit the second information;
fifth information, used to receive the system information of the second cell; or
sixth information, used to indicate a cell identity of the second cell (e.g., physical cell identity (PCI)).

In some implementations, the first information may include the fourth information (used to transmit the second information). For example, the fourth information may be used to determine a first resource, and the first resource is used to carry the second information. The fourth information may be resource configuration information of the first resource. After obtaining the fourth information, the first terminal device may determine the first resource according to an indication of the fourth information, and transmit the second information via the first resource. The first resource refers to the resource in the second cell used to carry the second information. The first resource may be a periodic resource or an aperiodic resource. For a detailed description of the first resource, please refer to the following content, which will not be described in detail here. If the first resource is the periodic resource, the fourth information may be used to indicate or determine a starting resource (position) of the periodic resource and/or a period length of the periodic resource.

In some implementations, the first information may include the fifth information (used to receive the system information of the second cell). The fifth information may be, for example, configuration information of the system information (e.g., SIB1). Exemplarily, the fifth information may include one or more of: configuration information of a search space of a Type0-PDCCH of the second cell, or configuration information of a control resource set 0 (CORESET0) of the second cell. Based on the fifth information, the first terminal device may monitor the Type0-PDCCH transmitted by the second cell to obtain an SIB1 of the second cell.

In some implementations, the first information may include the third information (used to indicate the frequency corresponding to the second cell). The frequency corresponding to the second cell may indicate the frequency corresponding to the SSB transmitted by the second cell, that is, the second cell transmits the SSB on the frequency indicated by the third information.

Furthermore, in some implementations, the second cell may transmit an SSB on a frequency corresponding to a global synchronization channel number (GSCN). That is, the frequency on which the second cell transmits the SSB corresponds to a sync raster. In this case, the third information may directly indicate the GSCN (or the number of the sync raster).

Alternatively, in some implementations, the second cell transmits an SSB on a first frequency, and the first frequency does not belong to the frequency corresponding to the GSCN (i.e., not a frequency corresponding to the sync raster).

If the second cell transmits an SSB on the frequency corresponding to the GSCN, in order to prevent a second terminal device (e.g., a legacy terminal device) from accessing the second cell, in some implementations, the SSB (hereinafter referred to as a first SSB) transmitted by the second cell on the frequency corresponding to the GSCN may not include the fifth information mentioned above (e.g., configuration information of SIB1). For example, a master information block (MIB) in the first SSB may indicate that the first SSB is a non-cell-defined SSB. That is, the MIB in the first SSB does not indicate the configuration information of the search space of the Type0-PDCCH and/or the configuration information of the CORESET0. Since the first SSB does not include the fifth information (e.g., configuration information of SIB1), the second terminal device (e.g., a legacy terminal device) cannot camp on or access the second cell, thereby reducing the impact of NES technology (transmitting system information on demand) on the legacy terminal device. For the first terminal device, it may obtain the fifth information from the first cell in the manner described above, to ensure that the first terminal device may camp on or access the second cell.

If the frequency on which the second cell transmits an SSB (hereinafter referred to as a second SSB) does not belong to the frequency corresponding to the GSCN, then a second terminal device (e.g., a legacy terminal device) will not discover the second SSB, thereby effectively preventing the second terminal device (e.g., a legacy terminal device) from camping on or accessing the second cell, and further reducing the impact of NES technology (transmitting system information on demand) on the legacy terminal device. Considering that the second terminal device (e.g., a legacy terminal device) will not discover the second SSB, the second SSB may include the fifth information mentioned above (e.g., configuration information of SIB1) to facilitate the first terminal device to camp on or access the second cell. If the second SSB includes the fifth information, the first information may include the fifth information or may not include the fifth information, which is not specifically limited in the embodiments of the present application.

In some implementations, the first information is information that is not identifiable (or not readable) by the second terminal device (e.g., a legacy terminal device). Since the second terminal device (e.g., a legacy terminal device) cannot camp on the second cell, setting the first information as information that is not identifiable by the second terminal device (e.g., a legacy terminal device) may effectively reduce the impact of NES technology on the legacy terminal device. As mentioned earlier, the first information may be cell reselection information of the first cell. Both the first terminal device and the second terminal device may camp on or access the first cell, and obtain the cell reselection information of the first cell. Setting the first information in the cell reselection information as information that is not identifiable by the second terminal device (or setting the first information in the cell reselection information as information that is identifiable by the first terminal device only) prevents the second terminal device from reselecting to the second cell based on the cell reselection information. It can be seen that this implementation provides an enhanced cell reselection scheme, and the cell reselection scheme may avoid the impact of the introduction of NES cells on the legacy terminal device.

The embodiments of the present application are described in more detail below with reference to specific examples. It should be noted that the examples of FIGS. 4 to 5 are only intended to help those skilled in the art understand the embodiments of the present application, and are not intended to limit the embodiments of the present application to the specific value or the specific scenario illustrated. Those skilled in the art may obviously make various equivalent modifications or changes based on the examples given in FIGS. 4 to 5, and such modifications or changes also fall within the scope of the embodiments of the present application.

### Example 1:

Referring to FIG. 4, in Example 1, it is assumed that Cell 1 and Cell 3 are normal cells, and Cell 2 is an NES cell that does not broadcast an SIB1. When a terminal device camps on Cell 1 or Cell 3 via sync raster 1 or sync raster 2, respectively, the terminal device may obtain the SIB1 from Cell 1 or Cell 3, and further obtain cell reselection information. The cell reselection information may be included in any SIB, such as an SIB2, an SIB3, an SIB4, etc. In Example 1, the cell reselection information includes first information (information related to Cell 2). For example, the cell reselection information includes one or more of the following of Cell 2: a GSCN, resource configuration information of a request message for requesting the SIB1, configuration information of a search space of a Type0-PDCCH of Cell 2, or configuration information of a CORESET0 of Cell 2. In addition, the information related to Cell 2 can only be read by a new terminal device (corresponding to the first terminal device mentioned above), which means that an old terminal device (corresponding to the second terminal device mentioned above) cannot read this information. At the same time, the MIB in the SSB corresponding to sync raster 3 indicates that the SSB is a non-cell-defined SSB, which means that the MIB in the SSB does not indicate the search space of the Type0-PDCCH and/or CORESET0. Therefore, when the old terminal device obtains the SSB of Cell 2, it will understand that the SSB of Cell 2 is a non-cell-defined SSB. Therefore, the old terminal device will not access Cell 2. In addition, as described above, when the old terminal device camps on Cell 1 or Cell 3, after reading SIB1, the old terminal device cannot read any information related to the NES cell (Cell 2). Therefore, the old terminal device will not attempt to access Cell 2 (because for the old terminal device, Cell 2 is not a candidate cell in a cell reselection list). Therefore, only a new terminal device (e.g., an R19 or later terminal device) can obtain the information related to Cell 2 and can access Cell 2.

### Example 2:

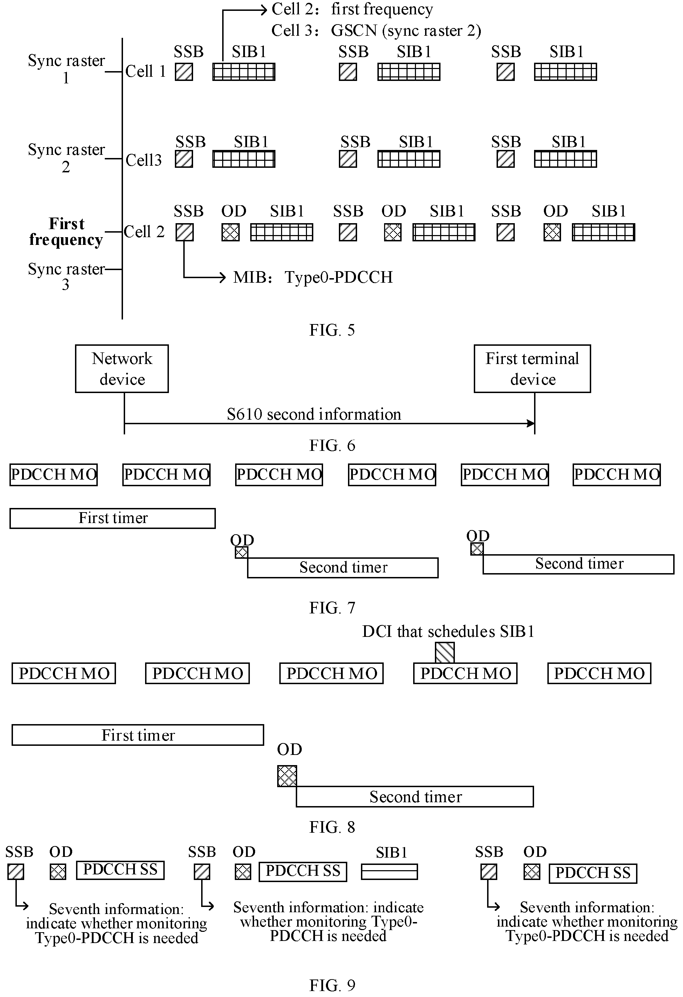

Referring to FIG. 5, in Example 2, Cell 2 does not transmit an SSB on a sync raster, but transmits an SSB on a frequency outside the sync raster. The SSB may include a normal MIB to provide necessary information for cell initial access of the terminal device. For example, the MIB may include one or more of: synchronization information, configuration information of a search space of a Type0-PDCCH, or configuration information of a CORESET0. Since the SSB is not transmitted on a sync raster, an old terminal device cannot receive the SSB and thus cannot discover the cell. For normal cells, such as Cell 1 or Cell 3, their SSBs are transmitted on sync raster 1 and sync raster 2, respectively. When the old terminal device or a new terminal device discovers the cell, they may obtain the SIB1 of the cell, and obtain information related to Cell 2 directly through SIB1 or through other SIBs (e.g., an SIB2, an SIB3, or an SIB4). The information related to Cell 2 includes the frequency of the SSB used to discover Cell 2 (i.e., the first frequency in FIG. 5). Note that in this example, the first frequency is not at a sync raster, or the first frequency does not belong to the frequency corresponding to a GSCN. In addition, the information related to Cell 2 may further include resource configuration information of a request message for requesting SIB1. Since the information of the NES cell (Cell 2) can only be read by the new terminal device, Cell 2 may be a candidate cell for the new terminal device when performing cell reselection.

FIG. 6 is a schematic flowchart of a wireless communication method provided in another embodiment of the present application. The method of FIG. 6 includes step S610, that is, a first terminal device transmits second information in a second cell. The embodiment corresponding to FIG. 6 and the embodiment corresponding to FIG. 3 may be independent of each other or may be combined with each other. For example, in some implementations, the second information in step S610 can be transmitted based on the first information mentioned above. In this case, step S610 in FIG. 6 and step S320 in FIG. 3 may be understood as the same step.

In some implementations, step S610 may include: in a case where the first terminal device fails to monitor a Type0-PDCCH of the second cell within a first duration and/or fails to receive the system information of the second cell within the first duration, the first terminal device transmits the second information in the second cell. The first duration mentioned here may be a fixed period, or may be determined based on a timing duration of a first timer. A start time of the first timer may be started when the first terminal device starts detecting the Type0-PDCCH of the second cell and/or starts receiving the system information of the second cell.

Exemplarily, the first terminal device starts monitoring the Type0-PDCCH on a search space of the Type0-PDCCH and CORESET0, and starts a first timer. If the first terminal device fails to monitor the Type0-PDCCH (or DCI) before the first timer expires, the first terminal device transmits the second information in the second cell to request system information (e.g., SIB1). After the first terminal device transmits the second information, the first terminal device may continue to monitor the Type0-PDCCH and/or receive the system information of the second cell.

In some implementations, after the first terminal device transmits the second information, in a case where the first terminal device fails to monitor the Type0-PDCCH of the second cell within a second duration and/or fails to receive the system information of the second cell within the second duration, the first terminal device may retransmit the second information in the second cell. The second duration may be a fixed duration, or may be determined based on a timing duration of a second timer. The start time of the second timer may be determined based on the transmission time of the second information. For example, the second timer may be started after the first terminal device transmits the second information. If the second timer expires, the first terminal device retransmits the second information in the second cell, as illustrated in FIG. 7. Certainly, if during the running of the second timer, the first terminal device monitors the Type0-PDCCH of the second cell and/or receives the system information of the second cell, the first terminal device may access the second cell based on the Type0-PDCCH of the second cell and/or the system information of the second cell, as illustrated in FIG. 8.

In some implementations, in a case where a number of transmissions of the second information is greater than or equal to a first threshold (the first threshold may refer to the maximum number of times the first terminal device is allowed to transmit the second information in the same NES cell), and the first terminal device fails to monitor the Type0-PDCCH of the second cell and/or fails to receive the system information of the second cell, the first terminal device stops transmission of the second information. For example, the value of the first threshold may be 4, that is, after the first terminal device transmits the second information 4 times, if the first terminal device still fails to monitor the Type0-PDCCH of the second cell and/or fails to receive the system information of the second cell, the first terminal device is not allowed to continue transmitting the second information in the second cell. In this case, the first terminal device may try to access another cell.

In some implementations, the second cell may indicate in a certain manner whether a terminal device needs to monitor the Type0-PDCCH of the second cell, thereby reducing the power consumption required for monitoring the PDCCH. For example, in a case where the second cell indicates that monitoring the Type0-PDCCH of the second cell is not needed, the terminal device does not monitor the Type0-PDCCH of the second cell within a current SSB period; and/or, in a case where it is determined based on seventh information that the terminal device needs to monitor the Type0-PDCCH of the second cell, the first terminal device monitors the Type0-PDCCH of the second cell within the current SSB period. In a case where the second cell indicates that monitoring the Type0-PDCCH of the second cell is not needed, the terminal device may obtain system information from other terminal devices (i.e., system information may be shared among terminal devices), or the terminal device may wait for the next SSB period to determine whether to monitor the Type0-PDCCH of the second cell.

For example, as illustrated in FIG. 9, the first terminal device may receive seventh information from the second cell. The seventh information is used to determine (or indicate) whether a terminal device needs to monitor the Type0-PDCCH of the second cell. The seventh information may be carried, for example, in one or more SSBs transmitted by the second cell. Exemplarily, the seventh information is carried in one or more of: a physical broadcast channel (PBCH) demodulation reference signal (DMRS) in one or more SSBs, a PBCH payload in one or more SSBs, or an MIB in one or more SSBs.

The aforementioned second information (used to request to receive system information of the second cell) may be carried on one or more time-domain resources and/or frequency-domain resources configured by the network device. For ease of description, the resource carrying the second information is hereinafter referred to as a first resource, sometimes also referred to as an on demand (OD) resource (i.e., a resource based on which the terminal device may request system information on demand). The carrying first resource is described in detail below with examples.

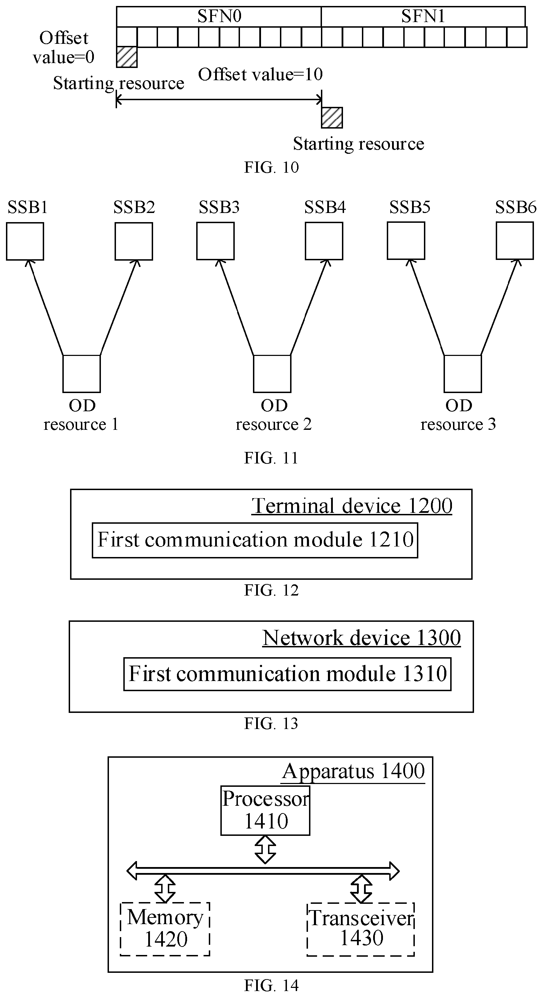

In some implementations, the first resource is a periodic resource. A starting resource position of the periodic resource may be associated with a first radio frame among periodic radio frames. For example, the starting resource position of the periodic resource is located within the first radio frame. As another example, the starting resource position of the periodic resource is located within an offset radio frame using the first radio frame as a reference frame. The first radio frame may include a radio frame with a system frame number (SFN) of 0. Taking FIG. 10 as an example, if the network device indicates an offset value of 0, the terminal device determines the starting resource position as a first slot in SFN0; if the offset value is 10, the terminal device determines that the starting resource position is located at a target position, which is the slot position obtained by offsetting 10 slots from the first slot in SFN0. Here, the unit of the offset value is a slot. Certainly, the unit of the offset value may also be a symbol or a radio frame.

Furthermore, in some implementations, the period length of the periodic resource may be determined (or represented) based on a number of symbols, a number of slots, or a number of frames.

In some implementations, the first resource is associated with one or more SSB indexes. For example, the first resource may be OD resource 1, OD resource 2, or OD resource 3 as illustrated in FIG. 11. It can be seen from FIG. 11 that OD resource 1 is associated with SSB1 and SSB2, OD resource 2 is associated with SSB3 and SSB4, and OD resource 3 is associated with SSB5 and SSB6.

In some implementations, the first resource is associated with one or more monitoring occasions (MOs) of a Type0-PDCCH. Furthermore, the one or more MOs of the Type0-PDCCH may also be associated with the one or more SSB indexes.

The method embodiments of the present application are described in detail above with reference to FIGS. 1 to 11. The apparatus embodiments of the present application are described in detail below with reference to FIGS. 12 to 14. It should be understood that the descriptions of the method embodiments and the description of the apparatus embodiments correspond to each other. Therefore, for parts not described in detail, please refer to the previous method embodiments.

FIG. 12 is a schematic structural diagram of a terminal device provided in an embodiment of the present application. A terminal device 1200 illustrated in FIG. 12 may include a first communication module 1210 and a second communication module 1220. The first communication module 1210 is configured to receive first information from a first cell. The second communication module 1220 is configured to transmit second information in a second cell according to the first information, where the second information is used to request to receive system information of the second cell.

In some implementations, the first information is used for cell reselection.

In some implementations, the first information includes one or more of: third information, used to indicate a frequency corresponding to the second cell; fourth information, used to transmit the second information; fifth information, used to receive the system information of the second cell; or sixth information, used to indicate a cell identity of the second cell.

In some implementations, the third information is used to indicate a GSCN corresponding to the second cell.

In some implementations, the second cell transmits a first SSB on a frequency corresponding to the GSCN, and the first SSB does not include the fifth information.

In some implementations, the third information is used to indicate a first frequency, and the first frequency does not belong to a frequency corresponding to a GSCN.

In some implementations, the second cell transmits a second SSB on the first frequency, and the second SSB includes the fifth information.

In some implementations, the fourth information is used to determine a first resource, and the first resource is used to carry the second information.

In some implementations, the first resource is a periodic resource, and the fourth information is used to determine a starting resource of the periodic resource and/or a period length of the periodic resource.

In some implementations, the fifth information includes one or more of: configuration information of a search space of a Type0-PDCCH of the second cell; or configuration information of a CORESET0 of the second cell.

In some implementations, the first information is information that is not identifiable by a second terminal device, and the second terminal device does not support accessing or camping on the second cell.

In some implementations, the second communication module 1220 is configured to: in a case where the first terminal device fails to monitor a Type0-PDCCH of the second cell within a first duration and/or fails to receive the system information of the second cell within the first duration, transmit the second information in the second cell according to the first information.

In some implementations, the first duration is determined based on a timing duration of a first timer.

In some implementations, the terminal device 1200 further includes: a third communication module, configured to, after the first terminal device transmits the second information in the second cell according to the first information, in a case where the first terminal device fails to monitor a Type0-PDCCH of the second cell within a second duration and/or fails to receive the system information of the second cell within the second duration, retransmit the second information in the second cell.

In some implementations, the second duration is determined based on a timing duration of a second timer.

In some implementations, a start time of a second timer is determined based on a transmission time of the second information.

In some implementations, the terminal device 1200 further includes: a stopping module, configured to, in a case where a number of transmissions of the second information is greater than or equal to a first threshold, stop transmission of the second information.

In some implementations, the second information is carried on a first resource, and the first resource meets one or more of: the first resource being a periodic resource; the first resource being associated with one or more SSB indexes; or the first resource being associated with one or more MOs of a Type0-PDCCH.

In some implementations, the first resource is the periodic resource, and the periodic resource meets one or more of: a starting resource position of the periodic resource being associated with a first radio frame among periodic radio frames; or a period length of the periodic resource being determined based on a number of symbols, a number of slots, or a number of frames.

In some implementations, the first radio frame includes a radio frame with an SFN of 0.

In some implementations, the one or more MOs of the Type0-PDCCH are associated with the one or more SSB indexes.

In some implementations, the terminal device 1200 further includes: a fourth communication module, configured to receive seventh information from the second cell, where the seventh information is used to determine whether the terminal device needs to monitor a Type0-PDCCH of the second cell.

In some implementations, the seventh information is carried in one or more SSBs transmitted by the second cell.

In some implementations, the seventh information is carried in one or more of: a physical broadcast channel demodulation reference signal (PBCH DMRS) sequence in the one or more SSBs; a PBCH payload in the one or more SSBs; or an MIB in the one or more SSBs.

In some implementations, the terminal device further includes: a monitoring module, configured to, in a case where it is determined based on the seventh information that the terminal device does not need to monitor the Type0-PDCCH of the second cell, not monitor the Type0-PDCCH of the second cell within a current SSB period; and/or, in a case where it is determined based on the seventh information that the terminal device needs to monitor the Type0-PDCCH of the second cell, monitor the Type0-PDCCH of the second cell within the current SSB period.

In some implementations, the system information includes an SIB1.

In some implementations, the first information is carried in one or more of following information of the first cell: an SIB1, an SIB2, an SIB3, or an SIB4.

FIG. 13 is a schematic structural diagram of a network device provided in an embodiment of the present application. A network device 1300 illustrated in FIG. 13 may include a first communication module 1310. The first communication module 1310 is configured to transmit first information via a first cell, where the first information is used for a terminal device to transmit second information in a second cell, and the second information is used for the terminal device to request to receive system information of the second cell.

In some implementations, the first information is used for cell reselection.

In some implementations, the first information includes one or more of: third information, used to indicate a frequency corresponding to the second cell; fourth information, used to transmit the second information; fifth information, used to receive the system information of the second cell; or sixth information, used to indicate a cell identity of the second cell.

In some implementations, the third information is used to indicate a GSCN corresponding to the second cell.

In some implementations, the second cell transmits a first SSB on a frequency corresponding to the GSCN, and the first SSB does not include the fifth information.

In some implementations, the third information is used to indicate a first frequency, and the first frequency does not belong to a frequency corresponding to a GSCN.

In some implementations, the second cell transmits a second SSB on the first frequency, and the second SSB includes the fifth information.

In some implementations, the fourth information is used to determine a first resource, and the first resource is used to carry the second information.

In some implementations, the first resource is a periodic resource, and the fourth information is used to determine a starting resource of the periodic resource and/or a period length of the periodic resource.

In some implementations, the fifth information includes one or more of: configuration information of a search space of a Type0-PDCCH of the second cell; or configuration information of a CORESET0 of the second cell.

In some implementations, the first information is information that is not identifiable by a second terminal device, and the second terminal device does not support accessing or camping on the second cell.

In some implementations, the second information is carried on a first resource, and the first resource meets one or more of: the first resource being a periodic resource; the first resource being associated with one or more SSB indexes; or the first resource being associated with one or more MOs of a Type0-PDCCH.

In some implementations, the first resource is the periodic resource, and the periodic resource meets one or more of: a starting resource position of the periodic resource being associated with a first radio frame among periodic radio frames; or a period length of the periodic resource being determined based on a number of symbols, a number of slots, or a number of frames.

In some implementations, the first radio frame includes a radio frame with an SFN of 0.

In some implementations, the one or more MOs of the Type0-PDCCH are associated with the one or more SSB indexes.

In some implementations, the network device 1300 further includes: a second communication module, configured to transmit seventh information via the second cell, where the seventh information is used to determine whether a terminal device needs to monitor a Type0-PDCCH of the second cell.

In some implementations, the seventh information is carried in one or more SSBs transmitted by the second cell.

In some implementations, the seventh information is carried in one or more of: a PBCH DMRS sequence in the one or more SSBs; a PBCH payload in the one or more SSBs; or an MIB in the one or more SSBs.

In some implementations, the system information includes an SIB1.

In some implementations, the first information is carried in one or more of following information of the first cell: an SIB1, an SIB2, an SIB3, or an SIB4.

FIG. 14 is a schematic structural diagram of a communication apparatus to which embodiments of the present application can be applied. The dashed lines in FIG. 14 indicate that the unit or module is optional. The apparatus 1400 may be configured to implement the method described in the previous method embodiments. The apparatus 1400 may be a chip, a terminal device, or a network device.

The apparatus 1400 may include one or more processors 1410. The processor 1410 may support the apparatus 1400 in implementing the method described in the previous method embodiments. The processor 1410 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA), or other programmable logic devices, discrete gate or transistor logic devices, discrete hardware components, etc. The general-purpose processor may be a microprocessor, or the processor may be any conventional processor, etc.

The apparatus 1400 may further include one or more memories 1420. The memory 1420 stores a program thereon, which may be executed by the processor 1410, enabling the processor 1410 to perform the method described in the previous method embodiments. The memory 1420 may be independent of the processor 1410 or integrated within the processor 1410.

The apparatus 1400 may further include a transceiver 1430. The processor 1410 may communicate with other devices or chips via the transceiver 1430. For example, the processor 1410 may transmit data to and receive data from other devices or chips via the transceiver 1430.

The embodiments of the present application further provide a computer-readable storage medium for storing a program. The computer-readable storage medium may be applied to the terminal device or network device provided in the embodiments of the present application, and the program enables a computer to perform the methods performed by the terminal device or network device in the various embodiments of the present application.

The embodiments of the present application further provide a computer program product. The computer program product includes a program. The computer program product may be applied to the terminal device or network device provided in the embodiments of the present application, and the program enables a computer to perform the methods performed by the terminal device or network device in the various embodiments of the present application.

The embodiments of the present application further provide a computer program. The computer program may be applied to the terminal device or network device provided in the embodiments of the present application, and the computer program enables a computer to perform the methods performed by the terminal device or network device in the various embodiments of the present application.

It should be understood that the terms "system" and "network" in the present application may be used interchangeably. Additionally, the terms used in the present application are only intended to explain specific embodiments of the present application and are not meant to limit the present application. In the specification and claims of the present application, as well as the accompanying drawings, terms such as "first," "second," "third," and "fourth" are used to distinguish between different objects and not to describe a specific order. Furthermore, the terms "include" and "have" and any variations thereof are intended to cover non-exclusive inclusion.

In the embodiments of the present application, the term "indicate/indicated/indicating/indication" may refer to a direct indication, an indirect indication, or may represent that there is an association relationship. As an example, if A indicates B, it may mean that A directly indicates B, for example, B can be acquired through A; or it may mean that A indicates B indirectly, for example, A indicates C, and B can be acquired through C; or it may mean that there is an association relationship between A and B.

In the embodiments of the present application, "B corresponding to A" means that B is associated with A, and B may be determined based on A. However, it should also be understood that determining B based on A does not mean that B is determined solely based on A; B may also be determined based on A and/or other information.

In the embodiments of the present application, the term "correspond/corresponding/correspondence" may mean that there is a direct correspondence or an indirect correspondence between two elements, or may mean that there is an association relationship between the two elements, or may mean a relationship such as indicating and being indicated, or configuring and being configured.

In the embodiments of the present application, "predefined" or "preconfigured" may be implemented by pre-storing corresponding codes, tables, or other means that may indicate relevant information in devices (e.g., including terminal devices and network devices). The present application does not limit the specific implementation method. For example, predefined may refer to what is defined in the protocol.

In the embodiments of the present application, the "protocol" may refer to standard protocols in the field of communications, such as an LTE protocol, an NR protocol, and related protocols applied in future communication systems, which are not limited in the present application.

In the embodiments of the present application, the term "and/or" herein describes an association relationship between associated objects, which indicates that there may be three kinds of relationships. For example, "A and/or B" may indicate three cases where: A exists alone, both A and B exist, and B exists alone. Additionally, a character "/" herein generally indicates that the associated objects before and after this character are in an "or" relationship.

In various embodiments of the present application, the numerical order of the above processes does not imply an order of execution. The execution order of the each process should be determined by its function and internal logic, but should not constitute any limitation on the implementation processes of the embodiments of the present application.

In the several embodiments provided in the present application, it should be understood that the disclosed system, apparatus, and method may be implemented in other ways. For example, the apparatus embodiments described above are merely illustrative. For example, the division of units is only a logical functional division, and in actual implementation, there may be other division manners. For example, multiple units or components may be combined or integrated into another system, or some features may be omitted or not executed. Additionally, the displayed or discussed mutual couplings or direct couplings or communication connections may be indirect couplings or communication connections through some interfaces, apparatuses, or units, which may be electrical, mechanical, or of other forms.

The units described as separate components may or may not be physically separate. The components displayed as units may or may not be physical units, meaning that they may be located in one place or distributed across multiple network units. Depending on actual needs, some or all of the units may be selected to achieve the objectives of the solutions of the embodiments.

Additionally, in various embodiments of the present application, each functional unit may be integrated into one processing unit, or each unit may exist physically alone, or two or more units may be integrated into one unit.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When the computer program instructions are loaded and executed on a computer, procedures or functions according to the embodiments of the present application are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (e.g., coaxial cable, optical fiber, digital subscriber line (DSL)) or wireless (e.g., infrared, radio, microwave) means. The computer-readable storage medium may be any available medium accessible to the computer, or a data storage device, such as a server or a data center that integrates one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above descriptions are merely specific implementations of the present application. However, the protection scope of the present application is not limited thereto. Any change or substitution that would be readily conceived by a person skilled in the art shall fall within the protection scope of the present application, provided that such change or substitution remains within the technical scope disclosed in the present application. Therefore, the protection scope of the present application should be subject to the protection scope of the claims.

## Claims

1. A wireless communication method, comprising:
receiving, by a first terminal device, first information from a first cell; and
transmitting, by the first terminal device, second information in a second cell according to the first information, wherein the second information is used to request to receive system information of the second cell.

2. The method according to claim 1, wherein the first information is used for cell reselection.

3. The method according to claim 1 or 2, wherein the first information comprises one or more of:
third information, used to indicate a frequency corresponding to the second cell;
fourth information, used to transmit the second information;
fifth information, used to receive the system information of the second cell; or
sixth information, used to indicate a cell identity of the second cell.

4. The method according to claim 3, wherein the third information is used to indicate a global synchronization channel number (GSCN) corresponding to the second cell.

5. The method according to claim 4, wherein the second cell transmits a first synchronization signal block (SSB) on a frequency corresponding to the GSCN, and the first SSB does not comprise the fifth information.

6. The method according to claim 3, wherein the third information is used to indicate a first frequency, and the first frequency does not belong to a frequency corresponding to a GSCN.

7. The method according to claim 6, wherein the second cell transmits a second SSB on the first frequency, and the second SSB comprises the fifth information.

8. The method according to any one of claims 3 to 7, wherein the fourth information is used to determine a first resource, and the first resource is used to carry the second information.

9. The method according to claim 8, wherein the first resource is a periodic resource, and the fourth information is used to determine a starting resource of the periodic resource and/or a period length of the periodic resource.

10. The method according to any one of claims 3 to 9, wherein the fifth information comprises one or more of:
configuration information of a search space of a type0-physical downlink control channel (Type0-PDCCH) of the second cell; or
configuration information of a control resource set 0 (CORESET0) of the second cell.

11. The method according to any one of claims 1 to 10, wherein the first information is information that is not identifiable by a second terminal device, and the second terminal device does not support accessing or camping on the second cell.

12. The method according to any one of claims 1 to 11, wherein transmitting, by the first terminal device, the second information in the second cell according to the first information comprises:
in a case where the first terminal device fails to monitor a Type0-PDCCH of the second cell within a first duration and/or fails to receive the system information of the second cell within the first duration, transmitting, by the first terminal device, the second information in the second cell according to the first information.

13. The method according to claim 12, wherein the first duration is determined based on a timing duration of a first timer.

14. The method according to any one of claims 1 to 13, wherein after transmitting, by the first terminal device, the second information in the second cell according to the first information, the method further comprises:
in a case where the first terminal device fails to monitor a Type0-PDCCH of the second cell within a second duration and/or fails to receive the system information of the second cell within the second duration, retransmitting, by the first terminal device, the second information in the second cell.

15. The method according to claim 14, wherein the second duration is determined based on a timing duration of a second timer.

16. The method according to claim 14 or 15, wherein a start time of a second timer is determined based on a transmission time of the second information.

17. The method according to any one of claims 1 to 16, further comprising:
in a case where a number of transmissions of the second information is greater than or equal to a first threshold, stopping, by the first terminal device, transmission of the second information.

18. The method according to any one of claims 1 to 17, wherein the second information is carried on a first resource, and the first resource meets one or more of:
the first resource being a periodic resource;
the first resource being associated with one or more SSB indexes; or
the first resource being associated with one or more monitoring occasions (MOs) of a Type0-PDCCH.

19. The method according to claim 18, wherein the first resource is the periodic resource, and the periodic resource meets one or more of:
a starting resource position of the periodic resource being associated with a first radio frame among periodic radio frames; or
a period length of the periodic resource being determined based on a number of symbols, a number of slots, or a number of frames.

20. The method according to claim 19, wherein the first radio frame comprises a radio frame with a system frame number (SFN) of 0.

21. The method according to any one of claims 18 to 20, wherein the one or more MOs of the Type0-PDCCH are associated with the one or more SSB indexes.

22. The method according to any one of claims 1 to 21, further comprising:
receiving, by the first terminal device, seventh information from the second cell, wherein the seventh information is used to determine whether a terminal device needs to monitor a Type0-PDCCH of the second cell.

23. The method according to claim 22, wherein the seventh information is carried in one or more SSBs transmitted by the second cell.

24. The method according to claim 23, wherein the seventh information is carried in one or more of:
a physical broadcast channel demodulation reference signal (PBCH DMRS) sequence in the one or more SSBs;
a PBCH payload in the one or more SSBs; or
a master information block (MIB) in the one or more SSBs.

25. The method according to any one of claims 22 to 24, further comprising:
in a case where it is determined based on the seventh information that the terminal device does not need to monitor the Type0-PDCCH of the second cell, not monitoring, by the first terminal device, the Type0-PDCCH of the second cell within a current SSB period; and/or
in a case where it is determined based on the seventh information that the terminal device needs to monitor the Type0-PDCCH of the second cell, monitoring, by the first terminal device, the Type0-PDCCH of the second cell within the current SSB period.

26. The method according to any one of claims 1 to 25, wherein the system information comprises a system information block 1 (SIB1).

27. The method according to any one of claims 1 to 26, wherein the first information is carried in one or more of following information of the first cell: an SIB1, an SIB2, an SIB3, or an SIB4.

28. A wireless communication method, comprising:
transmitting, by a network device, first information via a first cell, wherein the first information is used for a terminal device to transmit second information in a second cell, and the second information is used for the terminal device to request to receive system information of the second cell.

29. The method according to claim 28, wherein the first information is used for cell reselection.

30. The method according to claim 28 or 29, wherein the first information comprises one or more of:
third information, used to indicate a frequency corresponding to the second cell;
fourth information, used to transmit the second information;
fifth information, used to receive the system information of the second cell; or
sixth information, used to indicate a cell identity of the second cell.

31. The method according to claim 30, wherein the third information is used to indicate a global synchronization channel number (GSCN) corresponding to the second cell.

32. The method according to claim 31, wherein the second cell transmits a first synchronization signal block (SSB) on a frequency corresponding to the GSCN, and the first SSB does not comprise the fifth information.

33. The method according to claim 30, wherein the third information is used to indicate a first frequency, and the first frequency does not belong to a frequency corresponding to a GSCN.

34. The method according to claim 33, wherein the second cell transmits a second SSB on the first frequency, and the second SSB comprises the fifth information.

35. The method according to any one of claims 30 to 34, wherein the fourth information is used to determine a first resource, and the first resource is used to carry the second information.

36. The method according to claim 35, wherein the first resource is a periodic resource, and the fourth information is used to determine a starting resource of the periodic resource and/or a period length of the periodic resource.

37. The method according to any one of claims 30 to 36, wherein the fifth information comprises one or more of:
configuration information of a search space of a type0-physical downlink control channel (Type0-PDCCH) of the second cell; or
configuration information of a control resource set 0 (CORESET0) of the second cell.

38. The method according to any one of claims 28 to 37, wherein the first information is information that is not identifiable by a second terminal device, and the second terminal device does not support accessing or camping on the second cell.

39. The method according to any one of claims 28 to 38, wherein the second information is carried on a first resource, and the first resource meets one or more of:
the first resource being a periodic resource;
the first resource being associated with one or more SSB indexes; or
the first resource being associated with one or more monitoring occasions (MOs) of a Type0-PDCCH.

40. The method according to claim 39, wherein the first resource is the periodic resource, and the periodic resource meets one or more of:
a starting resource position of the periodic resource being associated with a first radio frame among periodic radio frames; or
a period length of the periodic resource being determined based on a number of symbols, a number of slots, or a number of frames.

41. The method according to claim 40, wherein the first radio frame comprises a radio frame with a system frame number (SFN) of 0.

42. The method according to any one of claims 39 to 41, wherein the one or more MOs of the Type0-PDCCH are associated with the one or more SSB indexes.

43. The method according to any one of claims 28 to 42, further comprising:
transmitting, by the network device, seventh information via the second cell, wherein the seventh information is used to determine whether a terminal device needs to monitor a Type0-PDCCH of the second cell.

44. The method according to claim 43, wherein the seventh information is carried in one or more SSBs transmitted by the second cell.

45. The method according to claim 44, wherein the seventh information is carried in one or more of:
a physical broadcast channel demodulation reference signal (PBCH DMRS) sequence in the one or more SSBs;
a PBCH payload in the one or more SSBs; or
a master information block (MIB) in the one or more SSBs.

46. The method according to any one of claims 28 to 45, wherein the system information comprises a system information block 1 (SIB1).

47. The method according to any one of claims 28 to 46, wherein the first information is carried in one or more of following information of the first cell: an SIB1, an SIB2, an SIB3, or an SIB4.

48. A terminal device, wherein the terminal device is a first terminal device, and the first terminal device comprises:
a first communication module, configured to receive first information from a first cell; and
a second communication module, configured to transmit second information in a second cell according to the first information, wherein the second information is used to request to receive system information of the second cell.

49. The terminal device according to claim 48, wherein the first information is used for cell reselection.

50. The terminal device according to claim 48 or 49, wherein the first information comprises one or more of:
third information, used to indicate a frequency corresponding to the second cell;
fourth information, used to transmit the second information;
fifth information, used to receive the system information of the second cell; or
sixth information, used to indicate a cell identity of the second cell.

51. The terminal device according to claim 50, wherein the third information is used to indicate a global synchronization channel number (GSCN) corresponding to the second cell.

52. The terminal device according to claim 51, wherein the second cell transmits a first synchronization signal block (SSB) on a frequency corresponding to the GSCN, and the first SSB does not comprise the fifth information.

53. The terminal device according to claim 50, wherein the third information is used to indicate a first frequency, and the first frequency does not belong to a frequency corresponding to a GSCN.

54. The terminal device according to claim 53, wherein the second cell transmits a second SSB on the first frequency, and the second SSB comprises the fifth information.

55. The terminal device according to any one of claims 50 to 54, wherein the fourth information is used to determine a first resource, and the first resource is used to carry the second information.

56. The terminal device according to claim 55, wherein the first resource is a periodic resource, and the fourth information is used to determine a starting resource of the periodic resource and/or a period length of the periodic resource.

57. The terminal device according to any one of claims 50 to 56, wherein the fifth information comprises one or more of:
configuration information of a search space of a type0-physical downlink control channel (Type0-PDCCH) of the second cell; or
configuration information of a control resource set 0 (CORESET0) of the second cell.

58. The terminal device according to any one of claims 48 to 57, wherein the first information is information that is not identifiable by a second terminal device, and the second terminal device does not support accessing or camping on the second cell.

59. The terminal device according to any one of claims 48 to 58, wherein the second communication module is configured to:
in a case where the first terminal device fails to monitor a Type0-PDCCH of the second cell within a first duration and/or fails to receive the system information of the second cell within the first duration, transmit the second information in the second cell according to the first information.

60. The terminal device according to claim 59, wherein the first duration is determined based on a timing duration of a first timer.

61. The terminal device according to any one of claims 48 to 60, further comprising:
a third communication module, configured to, after the first terminal device transmits the second information in the second cell according to the first information, in a case where the first terminal device fails to monitor a Type0-PDCCH of the second cell within a second duration and/or fails to receive the system information of the second cell within the second duration, retransmit the second information in the second cell.

62. The terminal device according to claim 61, wherein the second duration is determined based on a timing duration of a second timer.

63. The terminal device according to claim 61 or 62, wherein a start time of a second timer is determined based on a transmission time of the second information.

64. The terminal device according to any one of claims 48 to 63, further comprising:
a stopping module, configured to, in a case where a number of transmissions of the second information is greater than or equal to a first threshold, stop transmission of the second information.

65. The terminal device according to any one of claims 48 to 64, wherein the second information is carried on a first resource, and the first resource meets one or more of:
the first resource being a periodic resource;
the first resource being associated with one or more SSB indexes; or
the first resource being associated with one or more monitoring occasions (MOs) of a Type0-PDCCH.

66. The terminal device according to claim 65, wherein the first resource is the periodic resource, and the periodic resource meets one or more of:
a starting resource position of the periodic resource being associated with a first radio frame among periodic radio frames; or
a period length of the periodic resource being determined based on a number of symbols, a number of slots, or a number of frames.

67. The terminal device according to claim 66, wherein the first radio frame comprises a radio frame with a system frame number (SFN) of 0.

68. The terminal device according to any one of claims 65 to 67, wherein the one or more MOs of the Type0-PDCCH are associated with the one or more SSB indexes.

69. The terminal device according to any one of claims 48 to 68, further comprising:
a fourth communication module, configured to receive seventh information from the second cell, wherein the seventh information is used to determine whether a terminal device needs to monitor a Type0-PDCCH of the second cell.

70. The terminal device according to claim 69, wherein the seventh information is carried in one or more SSBs transmitted by the second cell.

71. The terminal device according to claim 70, wherein the seventh information is carried in one or more of:
a physical broadcast channel demodulation reference signal (PBCH DMRS) sequence in the one or more SSBs;
a PBCH payload in the one or more SSBs; or
a master information block (MIB) in the one or more SSBs.

72. The terminal device according to any one of claims 69 to 71, further comprising:
a monitoring module, configured to, in a case where it is determined based on the seventh information that the terminal device does not need to monitor the Type0-PDCCH of the second cell, not monitor the Type0-PDCCH of the second cell within a current SSB period; and/or, in a case where it is determined based on the seventh information that the terminal device needs to monitor the Type0-PDCCH of the second cell, monitor the Type0-PDCCH of the second cell within the current SSB period.

73. The terminal device according to any one of claims 48 to 72, wherein the system information comprises a system information block 1 (SIB1).

74. The terminal device according to any one of claims 48 to 73, wherein the first information is carried in one or more of following information of the first cell: an SIB1, an SIB2, an SIB3, or an SIB4.

75. A network device, comprising:
a first communication module, configured to transmit first information via a first cell, wherein the first information is used for a terminal device to transmit second information in a second cell, and the second information is used for the terminal device to request to receive system information of the second cell.

76. The network device according to claim 75, wherein the first information is used for cell reselection.

77. The network device according to claim 75 or 76, wherein the first information comprises one or more of:
third information, used to indicate a frequency corresponding to the second cell;
fourth information, used to transmit the second information;
fifth information, used to receive the system information of the second cell; or
sixth information, used to indicate a cell identity of the second cell.

78. The network device according to claim 77, wherein the third information is used to indicate a global synchronization channel number (GSCN) corresponding to the second cell.

79. The network device according to claim 78, wherein the second cell transmits a first synchronization signal block (SSB) on a frequency corresponding to the GSCN, and the first SSB does not comprise the fifth information.

80. The network device according to claim 77, wherein the third information is used to indicate a first frequency, and the first frequency does not belong to a frequency corresponding to a GSCN.

81. The network device according to claim 80, wherein the second cell transmits a second SSB on the first frequency, and the second SSB comprises the fifth information.

82. The network device according to any one of claims 77 to 81, wherein the fourth information is used to determine a first resource, and the first resource is used to carry the second information.

83. The network device according to claim 82, wherein the first resource is a periodic resource, and the fourth information is used to determine a starting resource of the periodic resource and/or a period length of the periodic resource.

84. The network device according to any one of claims 77 to 83, wherein the fifth information comprises one or more of:
configuration information of a search space of a type0-physical downlink control channel (Type0-PDCCH) of the second cell; or
configuration information of a control resource set 0 (CORESET0) of the second cell.

85. The network device according to any one of claims 75 to 84, wherein the first information is information that is not identifiable by a second terminal device, and the second terminal device does not support accessing or camping on the second cell.

86. The network device according to any one of claims 75 to 85, wherein the second information is carried on a first resource, and the first resource meets one or more of:
the first resource being a periodic resource;
the first resource being associated with one or more SSB indexes; or
the first resource being associated with one or more monitoring occasions (MOs) of a Type0-PDCCH.

87. The network device according to claim 86, wherein the first resource is the periodic resource, and the periodic resource meets one or more of:
a starting resource position of the periodic resource being associated with a first radio frame among periodic radio frames; or
a period length of the periodic resource being determined based on a number of symbols, a number of slots, or a number of frames.

88. The network device according to claim 87, wherein the first radio frame comprises a radio frame with a system frame number (SFN) of 0.

89. The network device according to any one of claims 86 to 88, wherein the one or more MOs of the Type0-PDCCH are associated with the one or more SSB indexes.

90. The network device according to any one of claims 75 to 89, further comprising:
a second communication module, configured to transmit seventh information via the second cell, wherein the seventh information is used to determine whether a terminal device needs to monitor a Type0-PDCCH of the second cell.

91. The network device according to claim 90, wherein the seventh information is carried in one or more SSBs transmitted by the second cell.

92. The network device according to claim 91, wherein the seventh information is carried in one or more of:
a physical broadcast channel demodulation reference signal (PBCH DMRS) sequence in the one or more SSBs;
a PBCH payload in the one or more SSBs; or
a master information block (MIB) in the one or more SSBs.

93. The network device according to any one of claims 75 to 92, wherein the system information comprises a system information block 1 (SIB1).

94. The network device according to any one of claims 75 to 93, wherein the first information is carried in one or more of following information of the first cell: an SIB1, an SIB2, an SIB3, or an SIB4.

95. A terminal device, comprising a transceiver, a memory, and a processor, wherein the memory is configured to store a program, and the processor is configured to invoke the program in the memory and control the transceiver to receive or transmit a signal, to enable the terminal device to perform the method according to any one of claims 1 to 27.

96. A network device, comprising a transceiver, a memory, and a processor, wherein the memory is configured to store a program, and the processor is configured to invoke the program in the memory and control the transceiver to receive or transmit a signal, to enable the communication device to perform the method according to any one of claims 28 to 47.

97. An apparatus, comprising a processor, configured to invoke a program from a memory, to enable the apparatus to perform the method according to any one of claims 1 to 27 or 28 to 47.

98. A chip, comprising a processor, configured to invoke a program from a memory, to enable a device equipped with the chip to perform the method according to any one of claims 1 to 27 or 28 to 47.

99. A computer-readable storage medium, having stored thereon a program, wherein the program enables a computer to perform the method according to any one of claims 1 to 27 or 28 to 47.

100. A computer program product, comprising a program, wherein the program enables a computer to perform the method according to any one of claims 1 to 27 or 28 to 47.

101. A computer program, wherein the computer program enables a computer to perform the method according to any one of claims 1 to 27 or 28 to 47.
